# FASCICULE DE BREVET EUROPEEN

(11) **EP 2 038 149 B1**
(45) Date de publication et mention de la délivrance du brevet: **29.09.2010**
(21) Numéro de dépôt: 07788977.2
(22) Date de dépôt: 11.06.2007
(51) Int. Cl.: B60T 7/06, B60R 21/09, G05G 1/30

(54) **DISPOSITIF DE PEDALIER RETRACTABLE EN CAS DE CHOC FRONTAL SUR UN VEHICULE**
EINZIEHBARE PEDALANORDNUNGSVORRICHTUNG BEI EINEM FRONTAUFPRALL AN EINEM FAHRZEUG
RETRACTABLE PEDAL ASSEMBLY DEVICE IN THE EVENT OF FRONT IMPACT ON A VEHICLE

(30) Priorité: 30.06.2006 FR 0652759
(43) Date de publication de la demande: 25.03.2009
(73) Titulaire: Peugeot Citroën Automobiles SA, 78140 Vélizy-Villacoublay (FR)
(72) Inventeur: CRETEL, Bruno, F-70200 RIGNOVELLE (FR); CHAUVIN, Pascal, F-91170 Viry Chatillon (FR); AUDRY-HELISSEY, Clarisse, F-78280 Guyancourt (FR)
(86) Numéro de dépôt international: PCT/FR2007/051408
(87) Numéro de publication internationale: WO 2008/000986

(56) Documents cités:
- EP-A- 1 481 860
- EP-A2- 0 803 420
- WO-A-2005/061292

## Description

### Domaine technique

La présente invention concerne le domaine de la sécurité du conducteur d'un véhicule, notamment un véhicule automobile, en cas de choc frontal sur ce dernier. Elle concerne plus particulièrement un dispositif de pédalier rétractable en cas de choc frontal sur un véhicule.

### Technique antérieure

Avec un pédalier classique, la pédale de frein et la pédale d'embrayage sont directement liées à des axes du pédalier. L'ensemble pédalier est fixé à la structure du véhicule et les pédales sont reliées à des tiges de commande respectivement du frein et de l'embrayage. Lors d'un choc frontal à grande vitesse, la structure du véhicule, et donc le tablier de support du pédalier, se déforme et entraîne une remontée de l'ensemble pédalier dans les jambes du conducteur en occasionnant des lésions à ses membres inférieurs pouvant aller jusqu'à leur rupture.

Plus particulièrement pour les pédales de frein, il est commun d'utiliser une tige pour relier la pédale de frein à un amplificateur de freinage. La tige se translate d'un faible débattement dans l'amplificateur de freinage qui va transformer et envoyer la commande de freiner jusqu'aux freins. Cependant, dans le cas où le conducteur serait en train de freiner lors d'une collision frontale, il peut être gravement blessé si le pédalier est poussé vers lui. En effet, le faible débattement de ladite tige ne va pas être à même de compenser le déplacement du pédalier.

Pour pallier à ces inconvénients, il est connu notamment du document FR 2 855 278 ou du document WO 2005/061292 A1 de proposer un dispositif de pédalier rétractable comportant un support de pédalier monté sur le tablier du véhicule dans la cave à pieds de ce dernier et sur lequel est articulé au moins un levier de commande de la pédale d'embrayage et/ou de frein. Ce levier de commande comprend un flasque de commande sur lequel est monté un flasque de renvoi pour une tige de commande reliée à ce flasque et agissant sur l'embrayage ou le frein. Ce dispositif comprend des moyens de solidarisation en translation latérale des flasques parallèlement à leur axe de rotation et des moyens de désolidarisation agissant sur les moyens de solidarisation pour désolidariser ces flasques en cas de choc frontal sur le véhicule en permettant un mouvement respectif d'écartement en translation latérale des flasques parallèlement à leur axe de rotation et provoquant leur désolidarisation.

La désolidarisation des flasques l'un par rapport à l'autre amène la pédale d'embrayage ou de frein à basculer vers la paroi de fond de la cave à pieds, sous son propre poids ou à l'aide d'un ressort de torsion.

L'état de la technique peut être également illustré par l'enseignement de la demande de brevet EP 1 481 860. Dans cette demande, il est proposé un système de recul pour une pédale de véhicule automobile comprenant une pédale, des moyens de transmission de l'effort appliqué sur ladite pédale, des moyens d'encadrement comportant au moins deux plaques sensiblement parallèles et permettant à ladite pédale d'être montée sur pivot. Ce système comporte en outre un dispositif d'écartement des moyens d'encadrement non solidaire de ces deux plaques permettant au pivot de se désengager des moyens d'encadrement en cas de choc dudit véhicule automobile.

Ces dispositifs de sécurité présentent l'inconvénient de ne pas limiter suffisamment l'intrusion du pédalier lors d'un choc frontal. En effet, lors de la remontée de l'ensemble pédalier en situation de choc frontal, cet ensemble peut percuter le bas de la colonne de direction à l'intérieur de l'habitacle du véhicule, entraînant un déplacement du volant supportant le coussin gonflable de sécurité, autrement nommé « air bag ». Un tel déplacement du volant risque donc de faire dévier l'expansion du coussin de sa direction initialement souhaitée pour la protection du conducteur.

### Exposé de l'invention

A cet effet, la présente invention propose un dispositif de pédalier rétractable qui, en cas de choc frontal à grande vitesse, évite le risque d'entraînement de la colonne de direction lors de l'intrusion dudit pédalier.

Le dispositif selon l'invention est ainsi prévu pour limiter la remontée de l'ensemble pédalier en cas de choc frontal, afin d'améliorer la protection du conducteur. On notera à ce sujet que l'ensemble pédalier peut ne pas comprendre de pédale d'embrayage (cas des véhicules à boîte de vitesses automatique), mais uniquement une pédale de frein.

De manière à résoudre les problèmes indiqués ci-dessus, l'invention propose un dispositif de pédalier pour véhicule, notamment pour véhicule automobile, disposé en regard d'une pièce solidaire de la structure du véhicule, et comprenant un support de pédalier fixé sur le tablier du véhicule et sur lequel est articulé un levier de commande d'une pédale, où le support de pédalier est fixé sur le tablier avec interposition de moyens d'appui formant liaison fusible entre le support et le tablier, ladite liaison fusible étant apte à se rompre pour permettre le rapprochement desdits support et tablier au-delà d'un effort seuil prédéterminé s'exerçant sur le dispositif de pédalier lors d'un contact avec la pièce solidaire de la structure du véhicule.

Les moyens d'appui maintiennent le support en regard du tablier à une distance prédéterminée, lesdits moyens d'appui comportant chacun une première extrémité formant liaison fusible avec l'un du support et du tablier, et une seconde extrémité en butée contre l'autre du support et du tablier.

En outre, ce dispositif de pédalier comprend un mécanisme de mise au plancher du levier d'actionnement de la pédale apte à se déclencher au-delà d'un effort appliqué par la pièce solidaire de la structure du véhicule sur le dispositif de pédalier, inférieur à l'effort seuil de rupture des liaisons fusibles.

Avantageusement, les liaisons fusibles sont conformées pour que l'effort seuil de rupture soit inférieur à l'effort de déformation de la pièce solidaire de la structure du véhicule, de sorte que le support de pédalier se rapproche du tablier par rupture desdites liaisons fusibles avant que le dispositif de pédalier ne déforme et/ou déplace ladite pièce.

Selon un mode de réalisation particulier, les moyens d'appui sont formés d'entretoises comportant une première extrémité montée partiellement à l'intérieur de perçages ménagées dans l'un du support de pédalier et du tablier, et une seconde extrémité montée contre l'autre du support et du tablier, les liaisons fusibles correspondant aux liaisons formées entre les entretoises et les perçages correspondants.

Conformément à d'autres caractéristiques avantageuses de l'invention :
- le dispositif comprend des vis de fixation destinées à être montées en partie à l'intérieur des entretoises creuses, afin de traverser le tablier et le support de pédalier et coopérer avec des écrous pour fixer le support de pédalier sur le tablier ;
- les entretoises et les perçages sont conformés pour que les entretoises ne glisse pas à l'intérieur desdits perçages en dessous de l'effort seuil de rupture des liaisons fusibles, et glisse à l'intérieur desdits perçages pour que le tablier et le support de pédalier se rapprochent l'un de l'autre au-delà dudit effort seuil ;
- les entretoises sont parallèles ;
- les perçages présentent des dimensions internes évolutives ;
- l'un des éléments de la liaison fusible, l'entretoise et le perçage, présente un organe en saillie, et l'autre des éléments de ladite liaison fusible présente une cavité de forme complémentaire audit organe en saillie, ledit organe en saillie étant disposé à l'intérieur de ladite cavité tant que la liaison fusible n'est pas rompue.

Avantageusement, les perçages sont obtenus par surmoulage des entretoises, lesdits perçages étant ménagés sur le support de pédalier qui est réalisé par un procédé de moulage de matière plastique.

### Description sommaire des dessins

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue de côté du dispositif de pédalier rétractable dans son état non actionné ;
- la figure 2 est une vue de côté du dispositif de pédalier rétractable dans un premier état actionné, après mise au plancher du levier de commande de la pédale de frein ou d'embrayage, correspondant à un basculement vers la paroi de fond de la cave à pieds ;

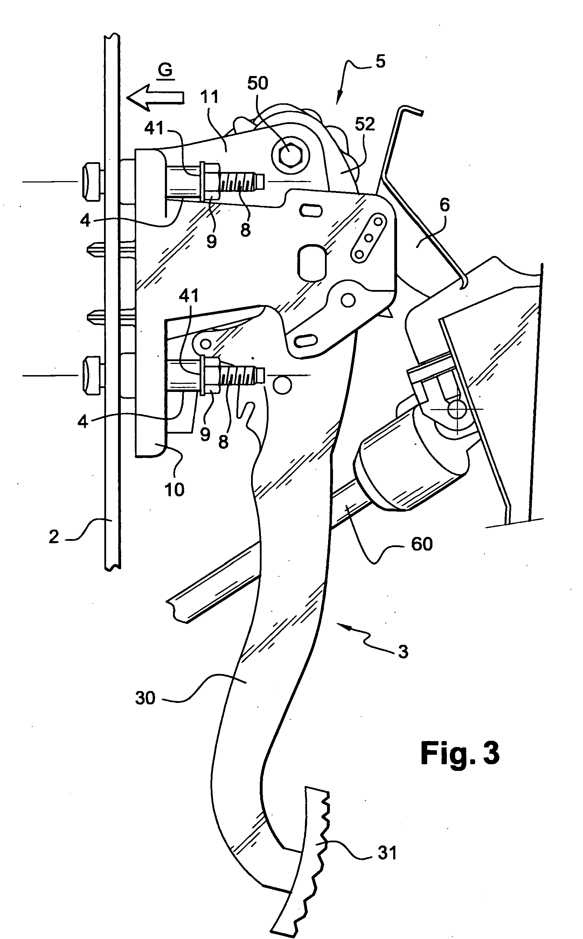

- la figure 3 est une vue de côté du dispositif de pédalier rétractable dans un deuxième état actionné, après enfoncement du support de pédalier contre le tablier ;
- la figure 4 est une vue en coupe partielle du support de pédalier dans l'état non actionné ou dans le premier état actionné ;
- la figure 5 une vue en coupe partielle du support de pédalier dans le deuxième état actionné ;
- la figure 6 est une vue en coupe partielle d'un premier mode de réalisation de la fixation du support de pédalier sur le tablier ;
- la figure 7 est une vue en coupe partielle d'un deuxième mode de réalisation de la fixation du support de pédalier sur le tablier.

### Manière(s) de réaliser l'invention

Le dispositif selon l'invention de pédalier rétractable en cas de choc frontal sur un véhicule comporte un support de pédalier 1 maintenu sur le tablier 2 du véhicule dans la cave à pieds de ce dernier et sur lequel est articulé un levier de commande 30 de la pédale de frein 3, et éventuellement un levier de commande de la pédale d'embrayage ; ladite pédale d'embrayage étant absente dans le cas des véhicules à boîte de vitesses automatique.

Dans ce qui suit, on parlera du levier de commande 30 de la pédale d'embrayage ou de frein, étant bien entendu que cette expression recouvre le cas où on prévoit à la fois un levier de commande de la pédale de frein et un levier de commande de la pédale d'embrayage, ou seulement le levier de commande de la pédale de frein.

Le support de pédalier 1 est en forme d'étrier et comprend une platine 10 et deux branches latérales 11, disposées en saillie de la platine 10 normalement à ladite platine 10.

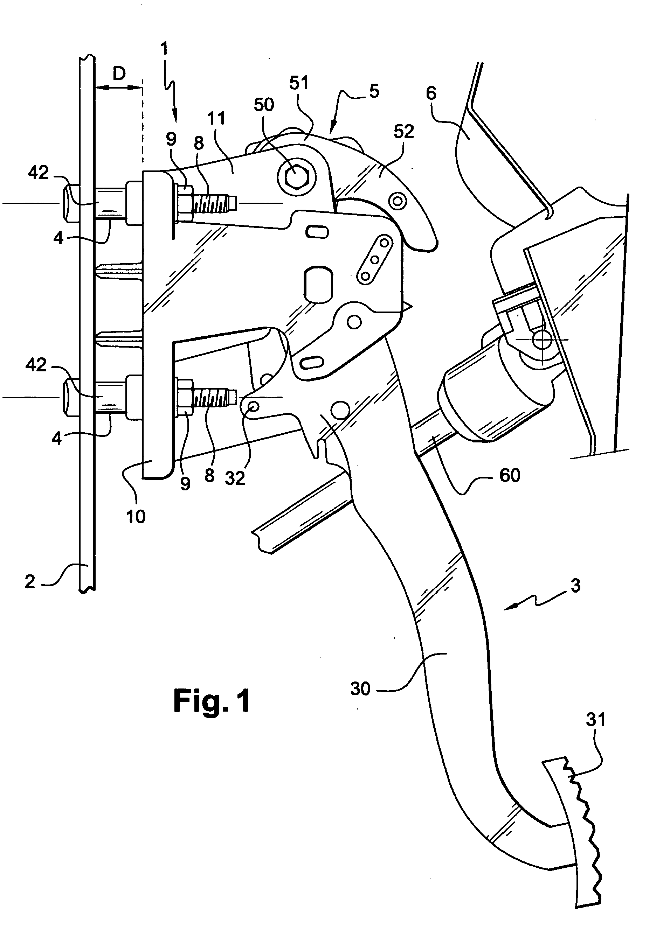

Comme représenté en figure 1, le support de pédalier 1 est fixé sur le tablier 2 avec interposition de moyens d'appui 4 maintenant ainsi ce support 1 en regard dudit tablier 2 à une distance D prédéterminée.

Ces moyens d'appui sont avantageusement formés d'entretoise 4 montées à une première extrémité 41 dans des perçages 12, de forme complémentaire aux entretoises 4" ménagés dans la platine 10 du support de pédalier 1. Ces perçages 12 sont par exemple réalisés aux quatre coins de la platine 10 et ainsi les entretoises 4 sont au nombre de quatre.

Les entretoises 4 sont, à leurs secondes extrémités 42, en butée contre le tablier 2. Ces entretoises 4 sont creuses et préférentiellement de forme cylindrique.

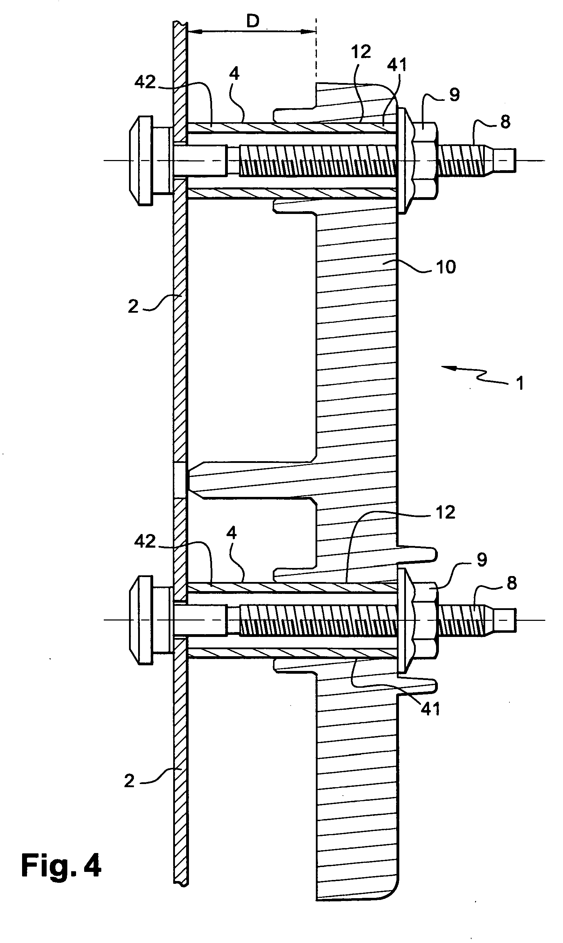

Comme représenté en figure 4, le support de pédalier 1 est fixé sur le tablier 2 au moyen de vis de fixation 8 montées en partie à l'intérieur des entretoises 4. De la sorte, les vis 8 peuvent traverser la platine 10 et le tablier 12 et coopérer avec des écrous 9 pour fixer le support 1 sur le tablier 2.

Chaque vis de fixation 8, montée dans une entretoise 4 correspondante, est plus longue que cette entretoise 4, et l'extrémité du corps de vis 8 dépasse de l'entretoise 4 et de la platine 10, de sorte que l'écrou 9 peut être vissé sur le pas de la vis de fixation 8 et peut être serré contre la première extrémité 41 de l'entretoise 4 et la platine 10.

Les entretoises 4 sont de longueur supérieure à l'épaisseur de la platine 10 où sont ménagés les perçages 12, de sorte à déboucher desdits perçages 12. Lorsque le dispositif de pédalier est dans son état non actionné, la première extrémité de l'entretoise 4 est affleurante à la paroi de la platine 10 opposée au tablier 2, et sur laquelle l'écrou 9 vient en appui. La deuxième extrémité de l'entretoise 4 est en appui sur le tablier 2.

Les vis de fixation 8 et les entretoises 4 sont parallèles, chacune des vis et des entretoises étant alignées selon une direction normale à la platine 10 ; la platine 10 s'étendant dans un plan sensiblement parallèle à la zone du tablier 2 sur laquelle le support de pédalier 1 est prévu pour fixation.

Le support de pédalier 1 est ainsi fixé sur le tablier 2 avec interposition d'entretoises 4 disposées dans les perçages 12 de la platine 10, de sorte que la platine 10 du support 1 est située en regard du tablier 2 à une distance prédéterminée correspondant à la différence de longueur entre l'entretoise 4 et l'épaisseur de la platine 10.

Lorsque le dispositif de pédalier est dans son état non actionné, la platine 10 est fixe par rapport aux entretoises 4 et le support de pédalier 1 reste à distance du tablier 2. Pour cela, les entretoises 4 et les perçages 12 sont dimensionnées pour que les perçages 12 soient serrés sur les entretoises 4 de sorte que le support de pédalier 1 ne glisse pas le long de ces entretoises 4.

Les entretoises 4 forment ainsi des liaisons fusibles avec le support de pédalier, ces liaisons étant aptes à se rompre au-delà d'un effort seuil Es prédéterminé s'exerçant sur le dispositif de pédalier. Ces liaisons fusibles correspondent aux liaisons formées entre les entretoises 4 et les perçages 12 corrrespondants.

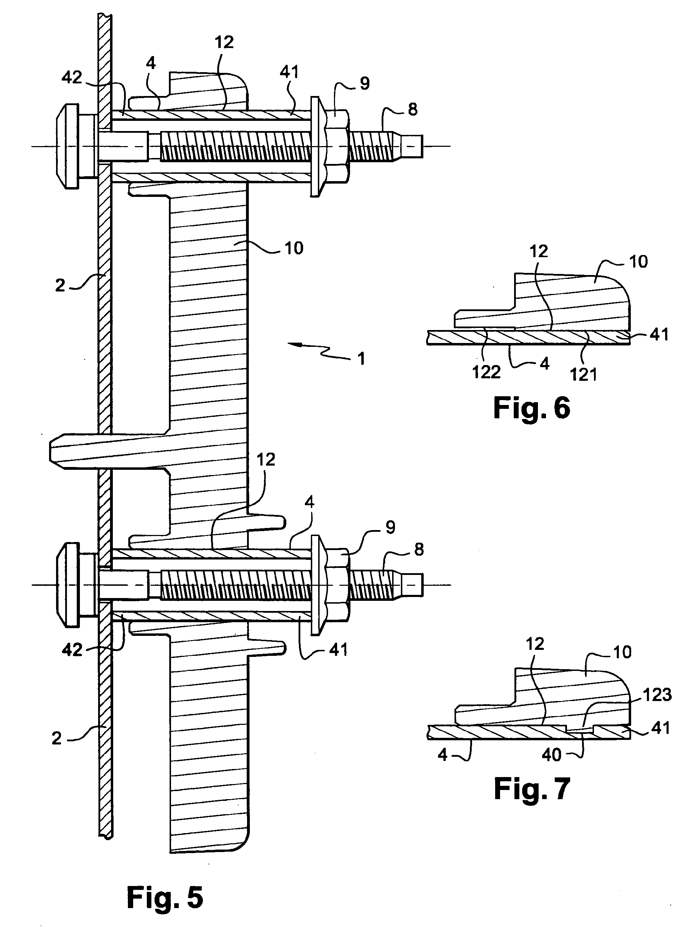

Ainsi, dans le cas d'un effort appliqué sur l'entretoise 4 ou le support de pédalier 1 dans une direction parallèle aux entretoises 4, les entretoises 4 sont dimensionnées pour que au-delà de l'effort seuil Es prédéterminé, le support 1 glisse le long des entretoises 4 et se rapproche du tablier 2 jusqu'à venir en butée contre le tablier 2, comme représenté en figure 5.

Selon un premier mode de réalisation représenté en figure 6, les perçages 12 présentent un diamètre évolutif qui déterminera la valeur de l'effort seuil Es au-delà duquel la platine 10 glisse le long de l'entretoise 4. Ainsi les perçages 12 comportent une première section 121 assurant le serrage de la platine 10 sur l'entretoise 4 et une deuxième section 122 non serrée sur l'entretoise 4 ; le diamètre de la première section 121 étant inférieur au diamètre de la deuxième section 122. L'effort seuil Es est déterminé par la longueur de la première section 121 et par la différence de diamètre entre cette section 121 et l'entretoise 4 correspondante.

Selon un autre deuxième mode de réalisation représenté en figure 7 et qui peut être complémentaire du premier mode de réalisation, une gorge 40 est ménagée sur tout le pourtour de ladite entretoise 4 et une veine 123, de forme complémentaire à la gorge 40, est formée en saillie de la surface interne du perçage 12 afin de coopérer avec ladite gorge 40. En complément du premier mode de réalisation, ces éléments gorge 40 et veine 123 augmentent la valeur de l'effort seuil Es.

De façon générale, l'un des éléments de la liaison fusible, l'entretoise 4 ou le perçage 12, présente un organe en saillie et l'autre des éléments de ladite liaison fusible présente une cavité de forme complémentaire audit organe en saillie, ledit organe en saillie étant disposé à l'intérieur de ladite cavité tant que la liaison fusible n'est pas rompue.

Avantageusement, les perçages 12 sont obtenus par un surmoulage des entretoises 4 ; le support de pédalier 1 étant obtenu par un procédé de moulage de matière plastique.

Dans le deuxième mode de réalisation, l'entretoise 4 comporte une gorge 40 de sorte que lors du moulage du support de pédalier 1, le plastique comble la gorge 40 et forme la veine 123 concourant à l'augmentation de la résistance au glissement du support 1 sur les entretoises 4.

Bien entendu la forme cylindrique de l'entretoise 4 et des perçages 12 n'est pas limitative ; les dimensions internes des perçages 12 et externes des entretoises 4 sont déterminantes pour la valeur de l'effort seuil Es de glissement du support de pédalier 1.

En outre, le levier de commande 30 de la pédale 3 est de forme incurvée et comporte à une de ses extrémités, un patin 31 apte à être utilisé par le conducteur pour pousser la pédale 3. A son extrémité opposée, le levier d'actionnement 30 comporte un orifice 32 permettant de solidariser ladite pédale 3 avec une tige de commande (non représenté) reliée à un système de freinage ou d'embrayage (non représenté).

Le levier de commande 30 est articulé sur le support de pédalier 1 au moyen d'un axe d'articulation 33 monté à ses deux extrémités sur les deux branches latérales 11 parallèles, formant moyen d'encadrement dudit levier de commande 30.

Le support de pédalier 1 comprend un mécanisme de mise au plancher du levier d'actionnement 30 lors d'un choc frontal, destiné à faire basculer ledit levier d'actionnement 30 vers la paroi de fond de la cave à pieds.

Ce mécanisme de mise au plancher comprend un organe formant basculeur 5 qui est monté à pivot sur le support de pédalier 1 au moyen d'un axe d'articulation 50 monté à ses deux extrémités sur les deux branches latérales 11. Ce basculeur 8 comporte une flasque 51 et un bras 52, s'étendant radialement et dans le même plan par rapport à ladite flasque 51. Comme on le voit à la figure 1 dans laquelle le dispositif de pédalier est représenté en état non actionné, autrement dit en état de fonctionnement normal avant un choc frontal, le doigt 52 du basculeur 5 se trouve à une distance prédéterminée et en regard d'une pièce 6 solidaire de la structure du véhicule et qui est en général un élément rigidement lié à la traverse de planche de bord du véhicule, tel qu'un support colonne destiné à maintenir la colonne de direction par rapport à ladite traverse. Dans ce qui suit, la pièce 6 sera dont simplement appelée le support colonne mais elle peut être toute pièce solidaire de la structure du véhicule.

Lors d'un fonctionnement normal, c'est-à-dire en dehors d'un accident occasionnant une déformation du tablier 2 sur lequel le dispositif de pédalier est monté, le conducteur appuie sur le patin 31 pour commander le système de freinage ou d'embrayage. Cette poussée fait tourner le levier d'actionnement 30 autour de l'axe 33 et induit un mouvement de translation de la tige de commande, permettant ainsi de commander le système de freinage ou d'embrayage. Dans ce fonctionnement, le dispositif de pédalier est en état non actionné et le mécanisme de mise au plancher est non enclenché.

Au contraire, en présence d'un choc frontal sur le véhicule, le support colonne 6 qui, comme on l'a vu plus haut, sert à maintenir la colonne de direction par rapport à la traverse de planche de bord, subit une déformation ou un recul quasi nul ou relativement faible au regard de la déformation ou du recul subi par le tablier 2. On rappelle à ce sujet que le tablier 2 est une paroi qui relie la traverse de planche de bord au soubassement du véhicule et supporte le dispositif de pédalier. Ainsi, le recul du tablier 2 lors d'un choc frontal entraîne du même coup le recul du dispositif de pédalier et de son support 1.

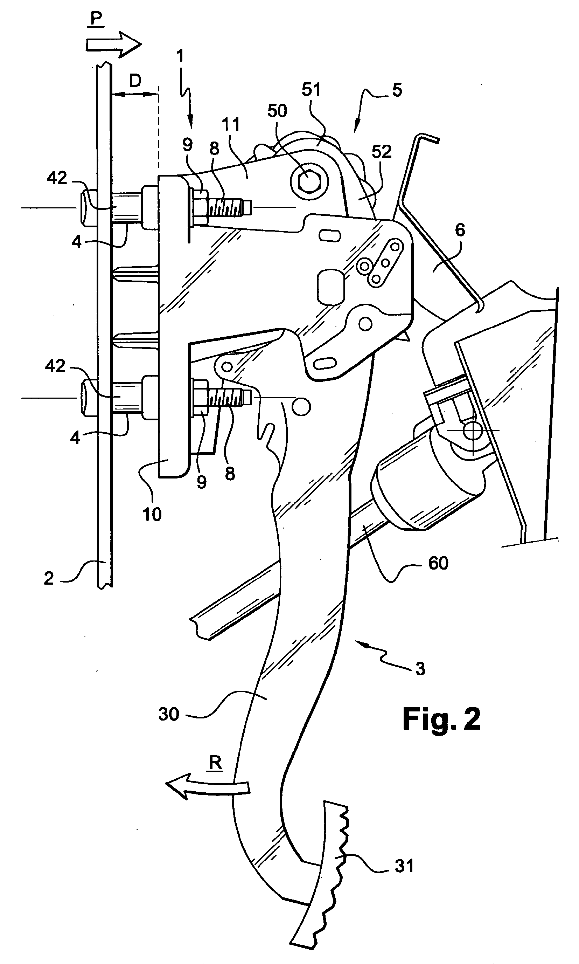

Lors d'un choc frontal violent, le tablier 2 pénètre dans l'habitacle, comme illustré par la flèche P de la figure 2, et le dispositif de pédalier est poussé vers le support colonne 6 ; le mécanisme de mise au plancher étant déclenché en fonction de la distance qui le sépare dudit support colonne 6.

Dans un premier temps, le mécanisme de mise au plancher entre en contact avec le support colonne 6 par l'extrémité libre du doigt 52 du basculeur 5. Au fur et à mesure que le dispositif de pédalier est poussé vers le support colonne 6, le basculeur 5 imprime un mouvement de rotation autour de l'axe 50, initié par la butée contre le support colonne 6, de sorte à déclenché le mécanisme de mise au plancher du levier d'actionnement 30 ; l'effort exercé par le rapprochement entre le basculeur 5 et le support colonne 6 étant supérieur à l'effort Em nécessaire au déclenchement dudit mécanisme de mise au plancher.

Comme représenté en figure 2 et au-delà d'un angle prédéfini de rotation du basculeur 5 autour de son axe 50, le mécanisme de mise au plancher assure le basculement du levier d'actionnement 30 selon un mouvement de recul par rapport au conducteur, illustré par la flèche R, entraînant de ce fait une mise au plancher du levier d'actionnement 30.

A titre d'illustration, le mécanisme de mise au plancher consiste à désolidariser le levier d'actionnement 30 de l'axe d'articulation 33, afin de rendre ledit levier 30 libre en rotation autour dudit axe 33, et donc apte à basculer vers la paroi de fond de la cave à pieds sous son propre poids ou à l'aide d'un ressort de torsion, non représenté.

Selon une autre réalisation non limitative, le mécanisme de mise au plancher comprend des éléments non représentés aptes à écarter les branches latérales 11 de sorte à désengager l'axe d'articulation 33 des branches latérales 11 du support de pédalier 1. Ainsi, le levier d'actionnement 30 est uniquement tenu par la tige de commande.

Pendant toute cette étape de mise au plancher du levier d'actionnement 30, le support de pédalier 1 reste à la distance D du tablier 2 ; l'effort de déclenchement du mécanisme de mise au plancher étant inférieur à l'effort seuil de glissement du support 1 le long des entretoises 4.

Le dispositif de pédalier rétractable est dans un premier état actionné, avec le levier d'actionnement 30 mis au plancher.

Dans un deuxième temps, le support de pédalier 1 glisse le long des entretoises 12 de sorte que la platine 10 du support 1 se rapproche du tablier 2 jusqu'à éventuellement venir en butée contre le tablier 2. De la sorte, le dispositif de pédalier recule dans son ensemble par rapport au conducteur, comme illustré par la flèche G.

Ce glissement G du support de pédalier 1 s'effectue quand l'effort exercé par le support colonne 6 sur ce support 1 dépasse l'effort seuil Es de glissement tel que décrit précédemment. Cet effort seuil Es de glissement est supérieur à l'effort Em nécessaire au déclenchement du mécanisme de mise au plancher, de sorte que le mécanisme de mise au plancher se déclenche avant le glissement du support de pédalier 1.

De plus, l'effort seuil Es de glissement est inférieur à l'effort de déformation Ed du support colonne 6, de sorte que le glissement du support de pédalier 1 limite le risque d'entraînement de la colonne de direction lors du choc du support de pédalier 1 sur le support colonne 6 du à l'intrusion du dispositif de pédalier dans l'habitacle.

Bien entendu l'exemple de mise en oeuvre évoqué ci-dessus ne présente aucun caractère limitatif et d'autres détails et améliorations peuvent être apportés au dispositif de pédalier selon l'invention, sans pour autant sortir du cadre de l'invention où d'autres formes d'entretoises et perçages peuvent être réalisées.

En outre, un autre mode de réalisation du dispositif de pédalier consiste les entretoises 4 sont en butée à leurs premières extrémités contre le support de pédalier 1 et montées à une seconde extrémité à l'intérieur de perçages ménagés dans le tablier 2. De même que précédemment, les liaisons fusibles sont formées des liaisons entre les entretoises et ces perçages, les perçages étant cette fois ménagés dans le tablier 2, et non dans le support de pédalier 1. Lors d'un choc conduisant à la rupture des liaisons fusibles, les entretoises 4 sont ainsi poussées par le support de tablier 1 et glissent dans les perçages à travers le tablier 2, conduisant ainsi au rapprochement du support 1 et du tablier 2.

## Revendications

1. Dispositif de pédalier pour véhicule, notamment pour véhicule automobile, disposé en regard d'une pièce (6) solidaire de la structure du véhicule, et comprenant un support de pédalier (1) fixé sur le tablier (2) du véhicule et sur lequel est articulé un levier de commande (30) d'une pédale (3), **caractérisé en ce que** le support de pédalier (1) est fixé sur le tablier (2) avec interposition de moyens d'appui (4) formant liaison fusible entre le support (1) et le tablier (2), lesdites liaisons fusibles étant aptes à se rompre pour permettre le rapprochement desdits support (1) et tablier (2) au-delà d'un effort seuil (Es) prédéterminé s'exerçant sur le dispositif de pédalier lors d'un contact avec la pièce (6) solidaire de la structure du véhicule.

2. Dispositif de pédalier selon la revendication 1, **caractérisé en ce que** les moyens d'appui (4) maintiennent le support (1) en regard dudit tablier (2) à une distance (D) prédéterminée, lesdits moyens d'appui (4) comportant chacun une première extrémité (41) formant liaison fusible avec l'un du support (1) et du tablier (2), et une seconde extrémité (42) en butée contre l'autre du support (1) et du tablier (2).

3. Dispositif de pédalier selon la revendication 1 ou 2, **caractérisé en ce qu'**il comprend un mécanisme de mise au plancher du levier d'actionnement (30) de la pédale (3) apte à se déclencher au-delà d'un effort (Em) appliqué par la pièce (6) solidaire de la structure du véhicule sur le dispositif de pédalier, inférieur à l'effort seuil (Es) de rupture des liaisons fusibles.

4. Dispositif de pédalier selon l'une quelconque des revendications 1 à 3, **caractérisé en ce que** les liaisons fusibles sont conformées pour que l'effort seuil (Es) de rupture soit inférieur à l'effort de déformation (Ed) de la pièce (6) solidaire de la structure du véhicule, de sorte que le support de pédalier (1) se rapproche du tablier (2) par rupture des dites liaisons fusibles avant que le dispositif de pédalier ne déforme et/ou déplace ladite pièce (6).

5. Dispositif de pédalier selon l'une quelconque des revendications 1 à 4, **caractérisé en ce que** les moyens d'appui sont formés d'entretoises (4) comportant une première extrémité (41) montée partiellement à l'intérieur de perçages (12) ménagées dans l'un du support de pédalier (1) et du tablier (2), et une seconde extrémité (42) montée contre l'autre du support (1) et du tablier (2), les liaisons fusibles correspondant aux liaisons formées entre les entretoises (4) et les perçages (12) correspondants.

6. Dispositif de pédalier selon la revendication 5, **caractérisé en ce qu'**il comprend des vis de fixation (8) destinées à être montées en partie à l'intérieur des entretoises (4) creuses, afin de traverser le tablier (2) et le support de pédalier (1) et coopérer avec des écrous (9) pour fixer le support de pédalier (1) sur le tablier (2).

7. Dispositif de pédalier selon l'une quelconque des revendications 5 et 6, **caractérisé en ce que** les entretoises (4) et les perçages (12) sont conformés pour que les entretoises (1) ne glisse pas à l'intérieur desdits perçages (12) en dessous de l'effort seuil de rupture des liaisons fusibles, et glisse à l'intérieur desdits perçages (12) pour que le tablier (2) et le support de pédalier (1) se rapprochent l'un de l'autre au-delà dudit effort seuil.

8. Dispositif de pédalier selon l'une quelconque des revendications 5 à 7, **caractérisé en ce que** les entretoises (4) sont parallèles.

9. Dispositif de pédalier selon l'une quelconque des revendications 5 à 8, **caractérisé en ce que** les perçages (12) présentent des dimensions internes évolutives.

10. Dispositif de pédalier selon l'une quelconque des revendications 5 à 9, **caractérisé en ce que** l'un des éléments de la liaison fusible, l'entretoise (4) et le perçage (12), présente un organe en saillie (123), et l'autre des éléments (4, 12) de ladite liaison fusible présente une cavité (40) de forme complémentaire audit organe en saillie (123), ledit organe en saillie (123) étant disposé à l'intérieur de ladite cavité (40) tant que la liaison fusible n'est pas rompue.

11. Dispositif de pédalier selon l'une quelconque des revendications 5 à 10, **caractérisé en ce que** les perçages (12) sont obtenus par surmoulage des entretoises (4), lesdits perçages (12) étant ménagés sur le support de pédalier (1) qui est réalisé par un procédé de moulage de matière plastique.

## Claims

1. Pedal device for a vehicle, in particular for an automobile vehicle, arranged opposite a part (6) integral with the structure of the vehicle, and comprising a pedal support (1) fixed on the firewall (2) of the vehicle and on which a control lever (30) of a pedal (3) is articulated, **characterized in that** the pedal support (1) is fixed on the firewall (2) with interposition of bearing means (4) forming a fusible link between the support (1) and the firewall (2), the said fusible links being capable of breaking to allow the bringing together of the said support (1) and firewall (2) beyond a predetermined threshold force (Es) being exerted on the pedal device on contact with the part (6) which is integral with the structure of the vehicle.

2. Pedal device according to Claim 1, **characterized in that** the bearing means (4) maintain the support (1) opposite the said firewall (2) at a predetermined distance (D), the said bearing means (4) each comprising a first end (41) forming a fusible link with the one of the support (1) and of the firewall (2), and a second end (42) in abutment against the other of the support (1) and of the firewall (2).

3. Pedal device according to Claim 1 or 2, **characterized in that** it comprises a mechanism for moving the actuating lever (30) of the pedal (3) to the floor, which is capable of being activated beyond a force (Em) applied by the part (6) integral with the structure of the vehicle on the pedal device which is less than the threshold force (Es) for breaking the fusible links.

4. Pedal device according to any one of Claims 1 to 3, **characterized in that** the fusible links are shaped such that the threshold breaking force (Es) is less than the deformation force (Ed) of the part (6) integral with the structure of the vehicle, such that the pedal support (1) moves nearer to the firewall (2) on breaking of the said fusible links before the pedal device deforms and/or moves the said part (6).

5. Pedal device according to any one of Claims 1 to 4, **characterized in that** the bearing means are formed of struts (4) comprising a first end (41) mounted partially inside drilled holes (12) arranged in the one of the pedal support (1) and firewall (2), and a second end (42) mounted against the other of the support (1) and firewall (2), the fusible links corresponding to the links formed between the struts (4) and the corresponding drilled holes (12).

6. Pedal device according to Claim 5, **characterized in that** it comprises fixing screws (8) intended to be mounted partially inside the hollow struts (4), so as to pass through the firewall (2) and the pedal support (1) and cooperate with nuts (9) to fix the pedal support (1) on the firewall (2).

7. Pedal device according to any one of Claims 5 and 6, **characterized in that** the struts (4) and the drilled holes (12) are shaped so that the struts (1) do not slide inside the said drilled holes (12) below the threshold breaking force of the fusible links, and slide inside the said drilled holes (12) so that the firewall (2) and the pedal support (1) move nearer to each other beyond the said threshold force.

8. Pedal device according to any one of Claims 5 to 7, **characterized in that** the struts (4) are parallel.

9. Pedal device according to any one of Claims 5 to 8, **characterized in that** the drilled holes (12) have tapered internal dimensions.

10. Pedal device according to any one of Claims 5 to 9, **characterized in that** one of the elements of the fusible link, the strut (4) and the drilled hole (12), has a projecting member (123), and the other of the elements (4, 12) of the said fusible link has a cavity (40) of complementary shape to the said projecting member (123), the said projecting member (123) being arranged inside the said cavity (40) whilst the fusible link is not broken.

11. Pedal device according to any one of Claims 5 to 10, **characterized in that** the drilled holes (12) are obtained by overmoulding of the struts (4), the said drilled holes (12) being arranged on the pedal support (1), which is realized by a method for moulding plastic material.

## Patentansprüche

1. Pedalvorrichtung für Fahrzeug, insbesondere für ein Kraftfahrzeug, die gegenüber einem Teil (6) angeordnet ist, der fest mit der Struktur des Fahrzeugs verbunden ist und einen Pedalträger (1) aufweist, der an der Schürze (2) des Fahrzeugs befestigt ist, und auf dem ein Steuerhebel (30) eines Pedals (3) angelenkt ist, **dadurch gekennzeichnet, dass** der Pedalträger (1) auf der Schürze (2) unter Einfügen von Auflagemitteln (4) befestigt ist, die eine schmelzbare Verbindung zwischen dem Träger (1) und der Schürze (2) bilden, wobei die schmelzbaren Verbindungen brechen können, um das Annähern des Trägers (1) und der Schürze (2) über eine vorbestimmte Schwellenkraft (Es) hinaus, die auf die Pedalvorrichtung bei einem Kontakt mit dem Teil (6), der fest mit der Struktur des Fahrzeugs verbunden ist, ausgeübt wird, zu erlauben.

2. Pedalvorrichtung nach Anspruch 1, **dadurch gekennzeichnet, dass** die Auflagemittel (4) den Träger (1) gegenüber der Schürze (2) in einer vorbestimmten Entfernung (D) halten, wobei die Auflagemittel (4) jeweils ein erstes Ende (41) aufweisen, das eine schmelzbare Verbindung entweder mit dem Träger (1) oder mit der Schürze (2) bildet, und ein zweites Ende (42) im Anschlag gegen das andere Element, nämlich den Träger (1) oder die Schürze (2).

3. Pedalvorrichtung nach Anspruch 1 oder 2, **dadurch gekennzeichnet, dass** sie einen Mechanismus aufweist, der den Betätigungshebel (30) des Pedals (3) an den Boden bringt, der sich über eine Kraft (Em), die von dem Teil (6), der fest mit der Struktur des Fahrzeugs verbunden ist, auf der Pedalvorrichtung ausgeübt wird, die kleiner ist als die Schwellenkraft (Es) des Brechens der schmelzbaren Verbindungen, hinaus auslösen kann.

4. Pedalvorrichtung nach einem der Ansprüche 1 bis 3, **dadurch gekennzeichnet, dass** die schmelzbaren Verbindungen ausgebildet sind, damit die Bruchschwellenkraft (Es) kleiner ist als die Verformungskraft (Ed) des Teils (6), der fest mit der Struktur des Fahrzeugs verbunden ist, so dass sich der Pedalträger (1) der Schürze (2) durch Brechen der schmelzbaren Verbindungen nähert, bevor die Pedalvorrichtung den Teil (6) verformt und/oder verlagert.

5. Pedalvorrichtung nach einem der Ansprüche 1 bis 4, **dadurch gekennzeichnet, dass** die Auflagemittel aus Abstandsstücken (4) ausgebildet sind, die ein erstes Ende (41) aufweisen, das teilweise in dem Inneren von Bohrungen (12) montiert ist, die entweder in dem Pedalträger (1) oder in der Schürze (2) eingerichtet sind, und ein zweites Ende (42), das gegen das andere Element, nämlich den Träger (1) oder die Schürze (2) montiert ist, wobei die schmelzbaren Verbindungen den Verbindungen entsprechen, die zwischen den Abstandsstücken (4) und den entsprechenden Bohrungen (12) ausgebildet sind.

6. Pedalvorrichtung nach Anspruch 5, **dadurch gekennzeichnet, dass** sie Befestigungsschrauben (8) aufweist, die dazu bestimmt sind, zum Teil im Inneren der hohlen Abstandsstücke (4) montiert zu werden, um die Schürze (2) und den Pedalträger (1) zu durchqueren und mit Muttern (9) zum Befestigen des Pedalträgers (1) auf der Schürze (2) zusammenzuwirken.

7. Pedalvorrichtung nach einem der Ansprüche 5 und 6, **dadurch gekennzeichnet, dass** die Abstandsstücke (4) und die Bohrungen (12) ausgebildet sind, damit die Abstandsstücke (1) nicht im Inneren der Bohrungen (12) unterhalb der Bruchschwellenkraft der schmelzbaren Verbindungen gleiten und im Inneren der Bohrungen (12) gleiten, damit sich die Schürze (2) und der Pedalträger (1) einander über die Schwellenkraft hinaus nähern.

8. Pedalvorrichtung nach einem der Ansprüche 5 bis 7, **dadurch gekennzeichnet, dass** die Abstandsstücke (4) parallel sind.

9. Pedalvorrichtung nach einem der Ansprüche 5 bis 8, **dadurch gekennzeichnet, dass** die Bohrungen (12) entwicklungsfähige interne Maße aufweisen.

10. Pedalvorrichtung nach einem der Ansprüche 5 bis 9, **dadurch gekennzeichnet, dass** eines der Elemente der schmelzbaren Verbindung, nämlich das Abstandsstück (4) oder die Bohrung (12) ein vorstehendes Organ (123) aufweist, und das andere dieser Elemente (4, 12) der schmelzbaren Verbindung einen Hohlraum (40) mit einer komplementären Form zu dem vorstehenden Organ (123) aufweist, wobei das vorstehende Organ (123) in Inneren des Hohlraums (40) angeordnet ist, solange die schmelzbare Verbindung nicht gebrochen wird.

11. Pedalvorrichtung nach einem der Ansprüche 5 bis 10, **dadurch gekennzeichnet, dass** die Bohrungen (12) durch Abformen der Abstandsstücke (4) erzielt werden, wobei die Bohrungen (12) auf dem Pedalträger (1) eingerichtet sind, der durch ein Plastikformverfahren hergestellt wird.
